# EUROPEAN PATENT SPECIFICATION

(11) **EP 2 911 455 B1**
(45) Date of publication and mention of the grant of the patent: **10.01.2018**
(21) Application number: 14360004.7
(22) Date of filing: 21.02.2014
(51) Int. Cl.: H04W 48/02, H04W 36/00

(54) **Managing switching of user equipment during CSFB**
Schaltverwaltung von Benutzergeräten während CSFB
Commutation de gestion d'équipement utilisateur dans CSFB

(43) Date of publication of application: 26.08.2015
(73) Proprietor: ALCATEL LUCENT, 92100 Boulogne-Billancourt (FR)
(72) Inventor: HOU, Jindong, Swindon, Wiltshire SN5 7DJ (GB)
(74) Representative: Berthier, Karine

(56) References cited:
- WO-A1-2013/184342
- US-A1- 2013 051 362
- CHINA TELECOM ET AL: "Countering Ping Pong Handover Mobility Solution", 3GPP DRAFT; S2-130978, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Diego, California, USA; 20130408 - 20130412 2 April 2013 (2013-04-02), XP050708225, Retrieved from the Internet: URL:http://www.3gpp.org/ftp/tsg_sa/WG2_Arc h/TSGS2_96_San_Diego/Docs/ [retrieved on 2013-04-02]
- LG ELECTRONICS: "Adding a recommendation on hysteresis mechanism for WORM feature", 3GPP DRAFT; 23272_CR0885R2_WORM_(REL-12)_S2-133027_CR0 885_23272_WORM_SOLUTION4_V3, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. SA WG2, no. Valencia, Spain; 20130715 - 20130719 2 December 2013 (2013-12-02), XP050742155, Retrieved from the Internet: URL:http://www.3gpp.org/ftp/Meetings_3GPP_ SYNC/SA/SA/Docs/ [retrieved on 2013-12-02]

## Description

### TECHNICAL FIELD

The present invention relates, in general to wireless telecommunications systems, and more particularly, although not exclusively, to a managing switching of user equipment.

### BACKGROUND

Heterogeneous telecommunications systems can include CS (Circuit Switched, circuit switched) network domains and PS (Packet Switched, packet switched) network domains. For example, an LTE system, comprising only a PS network, can transmit a high-speed data service. A CS domain in a GSM or UMTS network for example can perform a CS voice call. Typically, 3G/2G and so on systems include CS and PS network domains, whereas LTE systems include only PS network domains. Accordingly, user equipment (UE) operating on an LTE network will be unable to make CS voice calls. A CS fall back (CSFB) option has been developed in order to allow UE to use another radio access technology (RAT) network with core network CS voice call support, such as a 3G network for example, to serve a requested voice call. Once the voice call is terminated, the UE moves back to the PS network, such as LTE for example, so that PS data services can be served with potentially greater efficiency and throughput. WO2013184342 describes a system and method for managing redirection of a UE between networks in the event of a call failure.

### SUMMARY

According to an aspect, there is a method, in a heterogeneous wireless telecommunications system, for managing switching of user equipment (UE) between a first network supporting circuit switched (CS) voice calling and packet switched (PS) services and a second PS-only network, comprising modifying switch timing for redirection of the UE from the first network to the second network following completion of a CS voice call using a time delay value calculated in accordance with user specific parameters relating to UE CS voice call history data, and upon the expiration of the time delay value following completion of a CS voice call, determining whether to redirect the UE from the first network to the second network in accordance with system-specific parameters relating to network performance. Call history data can include data representing a historic CS voice call behavior of a user of the UE. System specific parameters can include signal strength measurements indicating quality and available throughput of the network received at the UE from respective nodes of the first and second networks. System specific parameters can include load information representing respective quality of service measurements for the first and second networks. CS voice call behavior can include an average or maximum time between two successive historic CS voice calls of the UE. Either the first or second network can be selected for PS service following termination of the CS voice call. The network can be selected using the performance parameters whereby to determine which of the first or second networks provides a relatively higher PS service quality measure for the UE. A weighting factor can be applied or used to bias selection of a network.

According to an aspect, there is provided a heterogeneous wireless telecommunications system including a first network supporting circuit switched (CS) voice calling and packet switched (PS) services and a second PS-only network, the system operable to manage switching of user equipment (UE) between the first and second networks using a time delay value associated with the UE and calculated in accordance with user specific parameters relating to UE CS voice call history data; and upon the expiration of the time delay value following completion of a CS voice call, determine whether to redirect the UE from the first network to the second network in accordance with system-specific parameters relating to network performance.
The system can further include an activity server to generate a time delay value associated with a UE and calculated in accordance with user- and/or system- specific parameters relating to UE CS voice call history data and/or network performance parameters. The system can be operable to receive a CS voice call request from the UE, and to redirect the UE to be served for CS voice calling to the first network.

According to an aspect, there is provided a computer program product, comprising a computer usable medium having computer readable program code embodied therein, said computer readable program code adapted to be executed to implement a method, in a heterogeneous wireless telecommunications system, for managing switching of user equipment (UE) between a first network supporting both circuit switched (CS) voice calling and packet switched (PS) services and a second PS-only network, as described herein.

### BRIEF DESCRIPTION OF THE DRAWINGS

Embodiments will now be described, by way of example only, with reference to the accompanying drawings, in which:
Figure 1 is a schematic representation of a process for adapting a time delay value via statistical feedback according to an example;
Figure 2 is a schematic representation of an adaptive redirection timing decision process according to an example;
Figure 3 is a schematic representation of an adaptive redirection timing decision process according to an example; and
Figure 4 is a schematic representation of a telecommunications system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent
to limit to the particular forms disclosed. Elements of the example embodiments are
consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The increasing deployment of 3G Small Cells means that the coverage of such cells and existing static 4G cells such as LTE cells will typically overlap. Accordingly, CSFB has turned into a solution that is more likely to be implemented in real network systems in order to enable a UE to move between CS network domains and PS network domains for CS voice calls and PS data service and so on.

Typically, redirection or switching from a first network supporting CS voice calling and PS data services to a second PS-only network for a CSFB UE at CS voice call completion is executed by redirecting the UE immediately after the CS call is terminated, or by considering on-going PS call(s) such that redirection of the UE is only executed when all active PS calls (if any) are normally released. That is, the schemes are static and do not suit a variety of dynamic environments. Particularly, they fail to take in consideration user behaviour and real-time network conditions, which can be used to make a better decision regarding redirection timing.

According to an example, a method and apparatus flexibly adapt redirection or switching timing using network quality dynamics and user behaviour patterns in order to achieve better network performance and better user experience.

Some users may make consecutive CS voice calls in a short period of time forming a burst of activity. For these users there is an associated call pattern relating to or representing the user behaviour in terms of typical CS voice call activity. For such users, it will generally be advantageous to wait before their associated UE is switched from the CS network domain in case another CS voice call is to be initiated. For example, if the UE in question is using a small cell, which is a low-powered radio access node, to perform a CS voice call, it can be more efficient to delay switching or handover of the UE from the small cell to the PS network, such as LTE, for a period of time so as to avoid the issue that the UE is prematurely moved due to the provision of consecutive CS calls. This can therefore reduce the handover/redirection signalling load of the system.

According to an example, a time delay value can be calculated in accordance with user-and/or system- specific parameters relating to UE CS voice call history data and/or network performance parameters. For example, a time delay value can be generated using individual user calling behaviour. An individual user is typically linked to and uses a UE, and so the calling behaviour of the user can be interchangeably referred to as the calling behaviour of the UE. Typical user call patterns can be recognised by collecting historical statistics, such as the frequency and duration of CS voice calls, and the interval between the CS voice calls. If a user likely intends to make several CS calls in a row in a short time period, a time delay can therefore be be employed to delay UE redirection from the CS network domain. Once the time delay value has expired, the UE can be moved back to the PS network. That is, in the delay period up to switching, the UE remains in the CS network domain, such as in a 3G network also including PS functionality, thereby continuing to enjoy CS call and PS services. For users who rarely makes consecutive CS calls, the time delay value can be set to zero or to a very small value to reflect the fact that it is safe to return this type of user to a PS network for example.

In an example, a time delay value can be tuneable and adaptive. That is, according to statistics such as the typical/maximum intervals between two consecutive CS voice calls for a user for example, the value can be optimized in order to achieve a trade-off between broad bandwidth as early as possible and avoiding redirection problems. The time delay value can be determined using CS voice call behavior for a user and can include an average or maximum time between two successive historic CS voice calls of the associated UE for example. Alternatively, it can be a typical time interval within which a proportion, such as the majority, of CS voice calls succeeding a CS voice call occur, such as >95% time interval between two calls <10s for example.

Such adjustment can be on per group of user or a per individual basis in order to provide personalised experiences for customers (better QoE - Quality of Experience, for example).

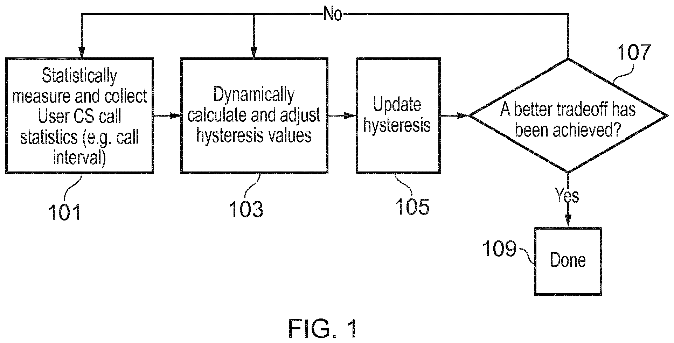

Figure 1 is a schematic representation of a process for adapting a time delay value via statistical feedback according to an example. In block 101 CS voice call statistics relating to a user/UE are collected. As noted above, the statistics can include, for example, data representing the interval between CS voice calls. The interval can be used to determine a user's propensity to make CS voice calls in succession within a predetermined period of time, thereby enabling a determination of whether the associated UE should be delayed from switching to a PS-only network domain in order to prevent a ping-pong effect as the UE has to be switched back to the CS voice call capable network domain in order to fulfil a request for a CS voice call.

In block 103, a hysteresis value is calculated using the data from block 101. The hysteresis value is a time delay value according to an example, and can be adjusted in response to changes in user behaviour from collected data from block 101. For example, a small or zero time delay value from block 103 can be adjusted to a relatively larger value in response to data collected in block 101 indicating that the user in question has changed behaviour and is therefore more likely to make successive CS voice calls. The value can thus be updated in block 105.

In block 107 it is determined whether a trade-off has been achieved between obtaining broad bandwidth potential for a UE (by switching to a PS network for example) as early as possible and avoiding redirection problems.

In block 107 it is determined whether a trade-off has been achieved between minimising repeated switching between two RATs (Radio Access Technologies) for the case of consecutive CS voice calls, and moving the UE towards the radio access technology with higher-capacity at the earliest possible time for the case of one-off voice call. Following time delay value adjustment, new performance statistics can be collected and analysed to see if the number of inter-RAT (repeated) switching events is less than a pre-defined threshold and if the percentage of succeeding PS data calls being served by a higher-capacity RAT is greater than a pre-defined threshold. If so, a good trade-off is regarded as being met and the process can stop; otherwise, the process can continue to adjust and tune the time delay value in an iterative or recursive way until such a trade-off is achieved or a pre-configured maximum number of tuning attempts have been made.

If it is determined that a suitable trade-off has been achieved the process can end in block 109. Otherwise, the process can revert to blocks 101 or 103. For example, if the output of block 107 is in the negative, the process can: 1) based on existing statistics data, directly adjust the time delay value. That is, revert from block 107 to block 103, bypassing 101, or 2) waiting to collect more call statistics data to update the whole call profile, and then adjust the time delay value based on the latest call statistics. That is, from block 107 to 101 (and to 103) as a full loop again.

When a UE is located in an area such as at a cell edge where signal strength can be poor, it is not always the case that redirecting back to this cell from the CS network domain, which may have better radio quality sat this location, is the best option since the CS network domain may be able to provide higher throughput for UE data services than the PS domain to which the UE would otherwise be redirected. Also, if, at the time when a CSFB call is complete, a macro LTE network for example is being overloaded while the overlapping Small Cell, for example, is lightly loaded and capable of offering a higher throughput locally to the UE, it makes no sense to prematurely redirect the UE to the congested LTE layer.

Therefore, according to an example, an adaptive method for redirection or switching using a time delay value can take into account actual network quality and bandwidth available for use. For example, in the case of a first network domain supporting at least CS voice calling and a second PS-only network domain, the network providing a higher bandwidth for a PS data services following a CS voice call can be determined by comparing this measure for each network. The network providing a higher bandwidth can be selected to serve the UE in question, rather than adopting a selection purely based on nominal 3G or 4G title for example.

For example, the first network domain can use radio sniffing or a UE measurement report to determine the signal quality of the second PS-only network domain, and deduce if the network is being overloaded.

In certain circumstances, a network providing CS voice calls may not have or may only provide a marginally better throughput than the PS-only network. However, customers and operators may still prefer the PS-only network to serve a UE data service. Thus, in an example, a weight factor can be used to prioritise the PS only network. That is, a weighting factor can be used to bias selection of a network domain for a UE following CS voice call termination.

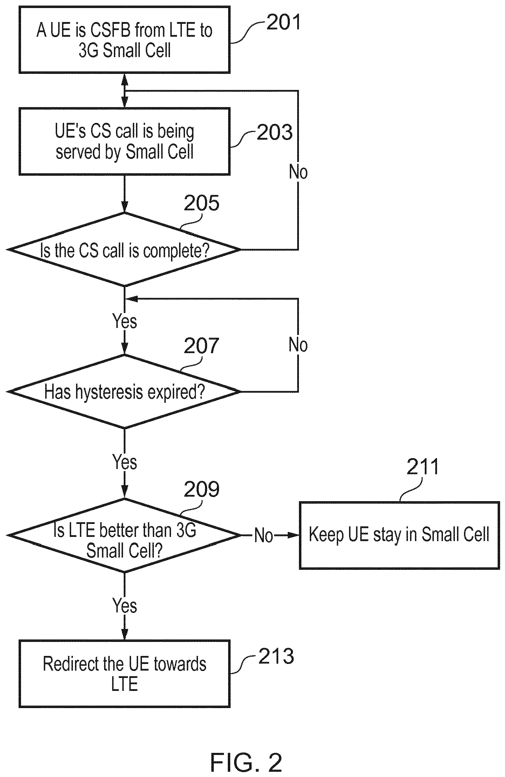

Figure 2 is a schematic representation of an adaptive redirection timing decision process according to an example. In block 201 a UE is switched to a 3G small cell (or similar, such as simply a 3G cell for example) from a 4G, such as LTE, network. That is, a CSFB is performed in order for a CS voice call request associated with the UE to be accommodated. In block 203, the UEs CS voice call is served by the CS capable network, such as a small cell. At block 205 it is determined if the CS call is complete. That is, if the CS voice call has terminated. If not, the process returns to check if the CS voice call has terminated. If the call is terminated, it is determined if the time delay value has expired in block 207. If not, the process continues to check if the time delay value has expired. If it has, in block 209, it is determined if the LTE network, that is the PS-only network would better serve the UE compared to the CS network, such as the small cell serving the UE for the CS voice call. If not, the UE remains linked with the small cell in block 211. If it is determined that the PS-only network would better serve the UE for PS services, the UE is switched at block 213 to the PS-only network, such as the LTE network.

According to an example, when a CSFB call is finished, a time delay mechanism comes into play in order to prevent premature redirection of the UE in question. Once the time delay value expires, the method further checks which network provides the better signal strength for PS services, and on the basis of this determination, the UE can be redirected or kept with the current network until the situation changes or until the UE autonomously switches. Signal strength measurements can indicate the quality and available throughput of the network in question, and can include radio signal quality, radio signal strength, cell load, path loss and so on.

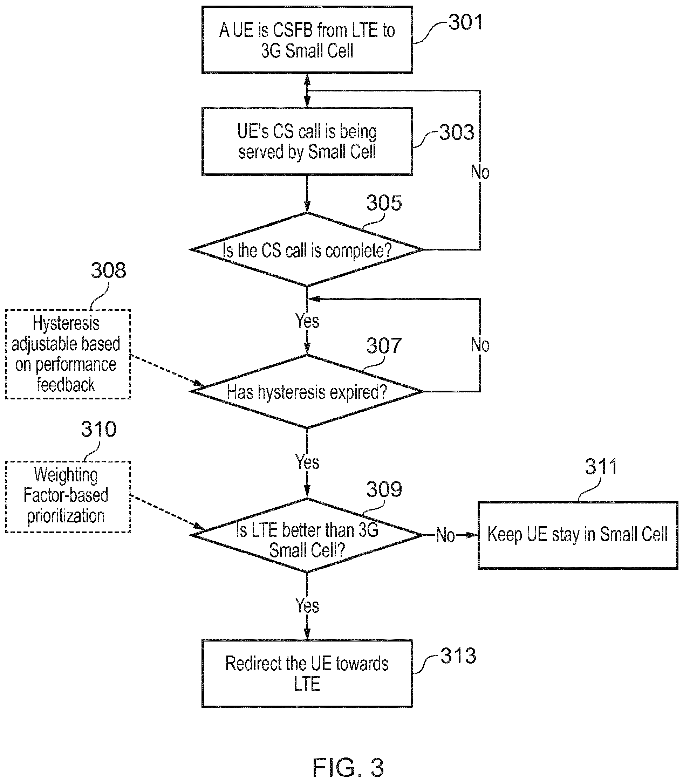

Figure 3 is a schematic representation of an adaptive redirection timing decision process according to an example, in which the use of a dynamically tuneable hysteresis (time delay value) and weighting factor is included. In block 301 a UE is switched to a 3G small cell (or similar, such as simply a 3G cell for example) from a 4G, such as LTE, network. That is, a CSFB is performed in order for a CS voice call request associated with the UE to be accommodated. In block 303, the UEs CS voice call is served by the CS capable network, such as a small cell. At block 305 it is determined if the CS call is complete. That is, if the CS voice call has terminated. If not, the process returns to check if the CS voice call has terminated. If the call is terminated, it is determined if the time delay value has expired in block 307. The time delay value used for the determination in block 307 can be updated with a modified time delay value from block 308, which value is adjusted based on performance feedback from the CS voice call serving network, the PS-only network, and CS call history statistics of the UE. For example, if a user changes behaviour indicating that a series of CS voice calls may be made in succession, the time delay value can be adjusted and updated, thereby affecting the determination at block 307.

If the value has not expired, the process continues to check if the time delay value has expired. If it has, in block 309, it is determined if the LTE network, that is the PS-only network would better serve the UE compared to the CS network, such as the small cell serving the UE for the CS voice call. A weighting factor in block 310 can be applied to bias the determination in block 309 as described above. If not, the UE remains linked with the small cell in block 311. If it is determined that the PS-only network would better serve the UE for PS services, the UE is switched at block 313 to the PS-only network, such as the LTE network.

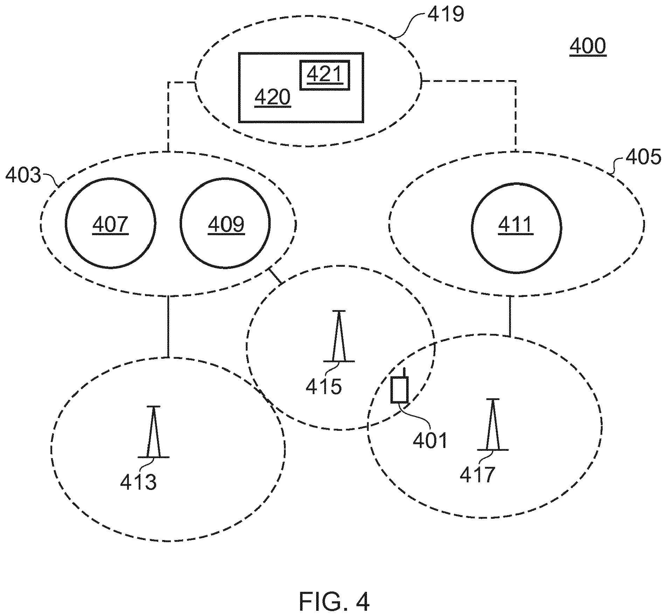

Figure 4 is a schematic representation of a telecommunications system according to an example. A UE 401 is in a region of overlapping coverage between a first network 403 and a second network 405. Network 403 includes CS, 407, and PS, 409, network domains. Network 405 includes a PS domain 411 only. Accordingly, network 403 can serve UE 401 for CS voice calls as well as PS services using domains 407,409. Network 405 can serve UE 401 for PS services using domain 411. Nodes or access points 413, 415 are associated with network 403, and node or access point 417 is associated with network 405 in the example of figure 3. For example, UE 401 can be served by node 415 for CS or PS services. Node 415 can be a macro node or small cell node in an example. UE 401 can be served by node 417 for PS services. Network 405 can be an LTE radio access network, and network 403 can be a 3G radio access network for example.

A core network domain 419 for the system 400 includes an activity server 420. Server 420 is operable to generate a time delay value 421 associated with UE 401 and calculated in accordance with user- and/or system- 400 specific parameters relating to UE 401 CS voice call history data and/or network performance parameters. In an example, server 420 provides the value 421 for at least one of networks 403 or 405 of the system 400 whereby to enable management of switching of the UE 401 between the networks 403, 405 using the value 421 to modify switch timing of the UE 401 from the network 403 to the network 405 following completion of a CS voice call.

Therefore, in an example and with reference to figure 4, UE 401 can be engaged in PS data services with network 405 via node 417. A user of UE 401 wishing to make a CS voice call can initiate such a call, which triggers redirection of the UE 401 from network 405 to network 403 so that the CS voice call can be served by CS domain 407 via node 415. PS services can be served by domain 409 for example. Upon termination of the CS voice call, UE 401 can be switched to network 405 after the time delay value 421 derived for UE 401 has expired, and in an example, providing that network 405 provides a better option for PS services than continuing to use PS domain 409 of network 403 for example.

A time delay value 421 is calculated using a user pattern indicating the propensity of a user to make consecutive CS voice calls in a burst. Once such a pattern is determined, it can be the case that the UE in question should not be immediately redirected to a PS-only network, such as LTE following termination of a CS voice call. Typically, users have a characteristic behaviour when making voice calls. For example, some use quick number dial, some look through a contact book of a UE, and others directly input the phone number in question. Therefore, a typical interval value or a value range associated with each type of user can be determined based on historic behaviour patterns.

UE autonomous cell reselection behaviour may cause a UE to reselect and move to a PS-only network by itself. This can be coordinated and solved by adjusting inter-RAT cell reselection parameters (e.g. absolute priority, cell specific Offset for reselection, thresholds for triggering inter-RAT cell search/cell selection) broadcast in SIBs of a small cell for example. Accordingly, UE autonomous behaviour would not conflict with the network-controlled smart fast return strategy.

In the example of using a small cell, which is a combination box including, in effect, an RNC and a NodeB, the small cell network fully controls the active UE. If, by the end of a CS voice call there are on-going or active PS calls, the small cell can decide whether to immediately release the on-going PS calls in order to do fast return, or wait for a predetermined period of time. The small cell can thus fully control if and when any on-going PS call should be terminated and execute it.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a heterogeneous wireless telecommunications system (400), for managing switching of user equipment, UE, (401) between a first network (403) supporting circuit switched, CS, voice calling and packet switched, PS, services and a second PS-only network (405), comprising:
modifying switch timing for redirection of the UE (401) from the first network (403) to the second network (405) following completion of a CS voice call using a time delay value calculated in accordance with user specific parameters relating to UE CS voice call history data; and
upon the expiration of the time delay value following completion of a CS voice call, determining whether to redirect the UE from the first network (403) to the second network (405) in accordance with system-specific parameters relating to network performance.

2. A method as claimed in claim 1, wherein call history data includes data representing a historic CS voice call behavior of a user of the UE (401).

3. A method as claimed in claim 1 or 2, wherein system specific parameters include signal strength measurements indicating quality and available throughput of the network received at the UE (401) from respective nodes (413; 415; 417) of the first (403) and second (405) networks.

4. A method as claimed in any preceding claim, wherein system specific parameters include load information representing respective quality of service measurements for the first (403) and second (405) networks.

5. A method as claimed in claim 2, wherein CS voice call behavior includes an average or maximum time between two successive historic CS voice calls of the UE (401).

6. A method as claimed in any preceding claim, further comprising selecting either the first (403) or second (405) network for PS service following termination of the CS voice call.

7. A method as claimed in claim 6, wherein the network is selected using the performance parameters whereby to determine which of the first (403) or second (405) networks provides a relatively higher PS service quality measure for the UE.

8. A method as claimed in claim 6 or 7, further including applying a weighting factor to bias selection of a network.

9. A heterogeneous wireless telecommunications system (400) including:
a first network (403) supporting circuit switched, CS, voice calling and packet switched, PS, services and a second PS-only network (405), the system operable to:
manage switching of user equipment, UE, (401) between the first (403) and second (405) networks using a time delay value associated with the UE and calculated in accordance with user specific parameters relating to UE CS voice call history data; and
upon the expiration of the time delay value following completion of a CS voice call, determine whether to redirect the UE (401) from the first network (403) to the second network (405) in accordance with system-specific parameters relating to network performance.

10. A system as claimed in claim 9, further including an activity server (420) to generate a time delay value associated with a UE and calculated in accordance with user- and/or system- specific parameters relating to UE CS voice call history data and/or network performance parameters.

11. A system as claimed in claim 9 or 10, operable to receive a CS voice call request from the UE, and to redirect the UE to be served for CS voice calling to the first network.

12. A computer program product, comprising a computer usable medium having computer readable program code embodied therein, said computer readable program code adapted to be executed to implement a method, in a heterogeneous wireless telecommunications system, for managing switching of user equipment, UE, between a first network (403) supporting both circuit switched voice calling and packet switched, PS, services and a second PS-only network (405), the method as claimed in any of claims 1 to 8.

## Patentansprüche

1. Verfahren, in einem heterogenen drahtlosen Telekommunikationssystem (400), für die Schaltverwaltung von Benutzergeräten, UE, (401) zwischen einem ersten Netzwerk (403), das leitungsvermittelte, CS, Sprachanruf- und paketvermittelte, PS, Dienste unterstützt, und einem zweiten Nur-PS-Netzwerk (405), umfassend:
Ändern der Schaltzeitsteuerung für die Umleitung der UE (401) vom ersten Netzwerk (403) auf das zweite Netzwerk (405) im Anschluss an die Ausführung eines CS Sprachanrufs unter Verwendung eines Zeitverzögerungswertes, der in Übereinstimmung mit benutzerspezifischen Parametern betreffend UE CS Sprachanruf-Verlaufsdaten berechnet wird; und
nach Ablauf des Zeitverzögerungswertes im Anschluss an die Ausführung eines CS Sprachanrufs, Bestimmen, ob die UE vom ersten Netzwerk (403) auf das zweite Netzwerk (405) umgeleitet werden sollen in Übereinstimmung mit systemspezifischen Parametern betreffend Netzwerkleistung.

2. Verfahren nach Anspruch 1, wobei Anruf-Verlaufsdaten Daten beinhalten, die ein CS Sprachanruf-Verlaufsverhalten eines Benutzers der UE (401) darstellen.

3. Verfahren nach Anspruch 1 oder 2, wobei systemspezifische Parameter Signalstärkenmessungen beinhalten, die Qualität und verfügbaren Durchsatz des Netzwerks angeben, die an den UE (401) von jeweiligen Knoten (413; 415; 417) des ersten (403) und zweiten (405) Netzwerks empfangen werden.

4. Verfahren nach einem beliebigen vorstehenden Anspruch, wobei systemspezifische Parameter Lastinformationen beinhalten, die jeweilige Dienstgütemessungen für das erste (403) und zweite (405) Netzwerk darstellen.

5. Verfahren nach Anspruch 2, wobei das CS Sprachanrufverhalten eine durchschnittliche oder maximale Zeit zwischen zwei aufeinanderfolgenden CS Verlaufssprachanrufen der UE (401) beinhaltet.

6. Verfahren nach einem beliebigen vorstehenden Anspruch, weiterhin umfassend das Auswählen entweder des ersten (403) oder zweiten (405) Netzwerks für einen PS Dienst im Anschluss an die Beendigung des CS Sprachanrufs.

7. Verfahren nach Anspruch 6, wobei das Netzwerk ausgewählt wird unter Verwendung der Leistungsparameter, wobei zu bestimmen ist, welches von dem ersten (403) oder zweiten (405) Netzwerk ein relativ höheres PS Dienstqualitätsmaß für die UE bereitstellt.

8. Verfahren nach Anspruch 6 oder 7, weiterhin beinhaltend das Anwenden eines Gewichtungsfaktors zum Beeinflussen der Auswahl eines Netzwerks.

9. Heterogenes drahtloses Telekommunikationssystem (400), beinhaltend:
ein erstes Netzwerk (403), das leitungsvermittelte, CS, Sprachanruf- und paketvermittelte, PS, Dienste unterstützt, und ein zweites Nur-PS-Netzwerk (405), wobei das System betriebsfähig ist zur:
Schaltverwaltung von Benutzergeräten, UE, (401) zwischen dem ersten (403) und zweiten (405) Netzwerk unter Verwendung eines Zeitverzögerungswertes in Zusammenhang mit den UE und berechnet in Übereinstimmung mit benutzerspezifischen Parametern betreffend UE CS Sprachanruf-Verlaufsdaten; und nach Ablauf des Zeitverzögerungswertes im Anschluss an die Ausführung eines CS Sprachanrufs, Bestimmung, ob die UE (401) vom ersten Netzwerk (403) auf das zweite Netzwerk (405) umgeleitet werden sollen in Übereinstimmung mit systemspezifischen Parametern betreffend Netzwerkleistung.

10. System nach Anspruch 9, weiterhin beinhaltend einen Aktivitätsserver (420) zum Erstellen eines Zeitverzögerungswertes in Zusammenhang mit einem UE und berechnet in Übereinstimmung mit benutzer- und/oder systemspezifischen Parametern betreffend UE CS Sprachanruf-Verlaufsdaten und/oder Netzwerkleistungsparametern.

11. System nach Anspruch 9 oder 10, betriebsfähig zum Empfangen einer CS Sprachanrufanfrage von den UE und zum Umleiten der UE, die für CS Sprachanrufe zu bedienen sind, auf das erste Netzwerk.

12. Computerprogrammprodukt, umfassend ein computernutzbares Medium, das einen darin enthaltenen computerlesbaren Programmcode aufweist, wobei der besagte computerlesbare Programmcode angepasst ist, um zum Umsetzen eines Verfahrens ausgeführt zu werden, in einem heterogenen drahtlosen Telekommunikationssystem, für die Schaltverwaltung von Benutzergeräten, UE, zwischen einem ersten Netzwerk (403), das sowohl leitungsvermittelte Sprachanruf- als auch paketvermittelte, PS, Dienste unterstützt, und einem zweiten Nur-PS-Netzwerk (405), wobei das Verfahren einem beliebigen der Ansprüche 1 bis 8 entspricht.

## Revendications

1. Procédé, dans un système de télécommunications sans fil hétérogène (400), destiné à gérer la commutation d'équipement utilisateur, UE, (401) entre un premier réseau (403) prenant en charge des communications vocales en commutation de circuits, CS, et des services en commutation de paquets, PS, et un deuxième réseau (405) en mode exclusivement PS, comprenant les étapes suivantes :
modifier la synchronisation de la commutation pour la redirection de l'UE (401) du premier réseau (403) au deuxième réseau (405) après l'achèvement d'une communication vocale CS en utilisant une valeur de temporisation calculée selon des paramètres spécifiques à l'utilisateur relatifs aux données d'historique de communication vocale CS de l'UE ; et
à l'expiration de la valeur de temporisation après l'achèvement d'une communication vocale CS, déterminer s'il faut rediriger l'UE du premier réseau (403) vers le deuxième réseau (405) selon des paramètres spécifiques au système relatifs aux performances du réseau.

2. Procédé selon la revendication 1, dans lequel les données d'historique de communication incluent des données représentant le comportement historique de communication vocale CS d'un utilisateur de l'UE (401).

3. Procédé selon la revendication 1 ou 2, dans lequel les paramètres spécifiques au système incluent des mesures d'intensité du signal indiquant la qualité et le débit disponible du réseau reçu au niveau de l'UE (401) depuis les noeuds respectifs (413 ; 415 ; 417) du premier (403) et du deuxième (405) réseau.

4. Procédé selon l'une quelconque des revendications précédentes, dans lequel les paramètres spécifiques au système incluent des informations de charge représentant les mesures de qualité de service respective du premier (403) et du deuxième (405) réseau.

5. Procédé selon la revendication 2, dans lequel le comportement de communication vocale CS inclut un temps moyen ou maximum entre deux communications vocales CS historiques successives de l'UE (401).

6. Procédé selon l'une quelconque des revendications précédentes, comprenant en outre la sélection soit du premier réseau (403), soit du deuxième réseau (405) pour le service PS après l'achèvement de la communication vocale CS.

7. Procédé selon la revendication 6, dans lequel le réseau est sélectionné à l'aide des paramètres de performances afin de déterminer lequel du premier (403) ou du deuxième (405) réseau fournit une mesure de qualité de service PS comparativement supérieure pour l'UE.

8. Procédé selon la revendication 6 ou 7, incluant en outre l'application d'un facteur de pondération pour orienter la sélection d'un réseau.

9. Système de télécommunications sans fil hétérogène (400) incluant :
un premier réseau (403) prenant en charge des communications vocales en commutation de circuits, CS, et des services en commutation de paquets, PS, et un deuxième réseau (405) en mode exclusivement PS, le système permettant de :
gérer la commutation d'équipement utilisateur, UE, (401) entre le premier (403) et le deuxième (405) réseau en utilisant une valeur de temporisation associée à l'UE et calculée selon des paramètres spécifiques à l'utilisateur relatifs aux données d'historique de communication vocale CS de l'UE ; et
à l'expiration de la valeur de temporisation après l'achèvement d'une communication vocale CS, déterminer s'il faut rediriger l'UE (401) du premier réseau (403) vers le deuxième réseau (405) selon des paramètres spécifiques au système relatifs aux performances du réseau.

10. Système selon la revendication 9, incluant en outre un serveur d'activité (420) pour générer une valeur de temporisation associée à un UE et calculée selon des paramètres spécifiques à l'utilisateur et/ou au système relatifs aux données d'historique de communication vocale CS de l'UE et/ou aux paramètres de performances du réseau.

11. Système selon la revendication 9 ou 10, permettant de recevoir une demande de communication vocale CS en provenance de l'UE, et de rediriger l'UE pour lequel établir une communication vocale CS vers le premier réseau.

12. Produit-programme informatique, comprenant un support utilisable sur ordinateur disposant d'un code de programme embarqué lisible sur ordinateur, ledit code de programme lisible sur ordinateur étant adapté pour être exécuté afin de mettre en oeuvre un procédé, dans un système de télécommunications sans fil hétérogène, destiné à gérer la commutation d'équipement utilisateur, UE, entre un premier réseau (403) prenant en charge des communications vocales en commutation de circuits et des services en commutation de paquets, PS, et un deuxième réseau (405) en mode exclusivement PS, le procédé étant conforme à l'une quelconque des revendications 1 à 8.
